# EUROPEAN PATENT SPECIFICATION

(11) **EP 1 015 799 B1**
(45) Date of publication and mention of the grant of the patent: **19.03.2003**
(21) Application number: 97940251.8
(22) Date of filing: 15.09.1997
(51) Int. Cl.: F16K 31/00

(54) **A SHOCK VALVE**
STOSSVENTIL
SOUPAPE ANTICHOC

(43) Date of publication of application: 05.07.2000
(73) Proprietor: MBDA UK LIMITED, Stevenage, Hertfordshire SG1 2DA (GB)
(72) Inventor: HARPUR-BOURNE, Marcus, Sandy, Bedfordshire SG19 1OR (GB)
(74) Representative: Rooney, Paul Blaise
(86) International application number: GB9702491
(87) International publication number: WO99014521

(56) References cited:
- FR-A- 2 733 306
- GB-A- 728 857
- US-A- 3 084 705

## Description

This invention relates to shock valves which are used for releasing pressurised fluids when the valve is subject to a violent acceleration or deceleration above a threshold value, for example in motor vehicle driver protection airbags or for releasing cooling fluid in missiles.

It is known to use a shock valve for releasing pressurised cooling fluid for cooling part of a mortar at launch. Such a shock valve comprises a diaphragm acting as a valve closure for pressurised fluid contained thereby and a floating mass movable in relation to the diaphragm and having a sharp penetrating element thereon for penetrating the diaphragm and releasing the pressurised fluid when the mortar is subject to a threshold acceleration upon launch. The inertia of the mass acts to generate a reactive force between itself and the diaphragm as the diaphragm is accelerated during launch of the mortar. Such a design is described in FR-A-2733306.

A disadvantage of this design is the unpredictability with which puncturing of the diaphragm occurs leading to uncertainty as to the precise time at which fluid release will take place and as to the size of aperture created in the diaphragm by puncturing thereof.

GB-B-728,857 discloses a fire extinguisher having a closure member which has a flow passage terminating in a nozzle formed therein. The closure member has a sealing member attached, the sealing member projecting at an angle from the closure member. The flow passage extends into the sealing member. When the extinguisher is activated, a striker pin hits the sealing member, breaking it off from the closure member and thereby allowing fluid to flow out through the flow passage.

This design has the disadvantage that the mass does not consistently touch the sealing member at the same place for each fire extinguisher as its movement is not controlled. Consequently the force required to break the sealing member will vary, and therefore the time at which fluid release will occur is unpredictable.

It is an object of the present invention to provide a shock valve which overcomes the disadvantages of the prior art.

According to the present invention there is provided a shock valve for releasing a fluid in response to an acceleration applied thereto above a threshold value, the valve including a fixed lever arm defining a sealed fluid passageway therein and a mass, the lever arm and mass being relatively positioned so that during the said acceleration, the mass exerts a bending moment on the arm to fracture same and break the fluid seal, the mass being shaped at least partially to surround the lever arm whereby to guide the arm during bending thereof.

The invention provides a valve which operates with greater certainty than known valves.

The mass may form an integral part with the lever arm or may be a separate element. In the latter case, the mass may float substantially along an axis of a bore within which such a floating mass is slideable and into which the lever arm projects. The bore may be provided with an anti-rattle device, such as a spring. This device prevents the floating mass from attempting to fatigue or overstress the lever arm when the shock valve is exposed to vibration or shock e.g. during transit prior to deployment. In one embodiment, a spring-loaded element is arranged to hold the floating mass off the lever arm by a small amount and to be of sufficient stiffness to withstand all levels of vibration or shock below the threshold acceleration.

The mass is shaped at least partially to surround the lever arm whereby to guide the arm during bending thereof. This arrangement ensures that the bending path of the lever arm is closely controlled and ensures optimum predictability of the position and time of fracture of the arm.

The arm preferably has a weakening formed therein to encourage fracture at the weakening. The weakening may comprise a peripheral groove formed around the arm which may be of substantially rectangular cross section. Alternatively other sections, for example substantially V-shaped sections may be suitable for given designs. Another useful form of groove cross-section is a "half-moon", as formed by a radiused cutting tool.

Preferably the weakening in the arm is formed in a surrounding wall of the sealed passageway wherein fracture of the arm at the weakening will immediately break the fluid seal.

The lever arm and the floating mass may be positioned and formed whereby contact therebetween during bending of the arm is substantially at a fixed location along the arm, preferably at a free end thereof. It is also preferable for the centre of mass of the floating mass to be aligned with the point of contact. This measure ensures minimum friction between the floating mass and its bore and hence maximises the applied moment.

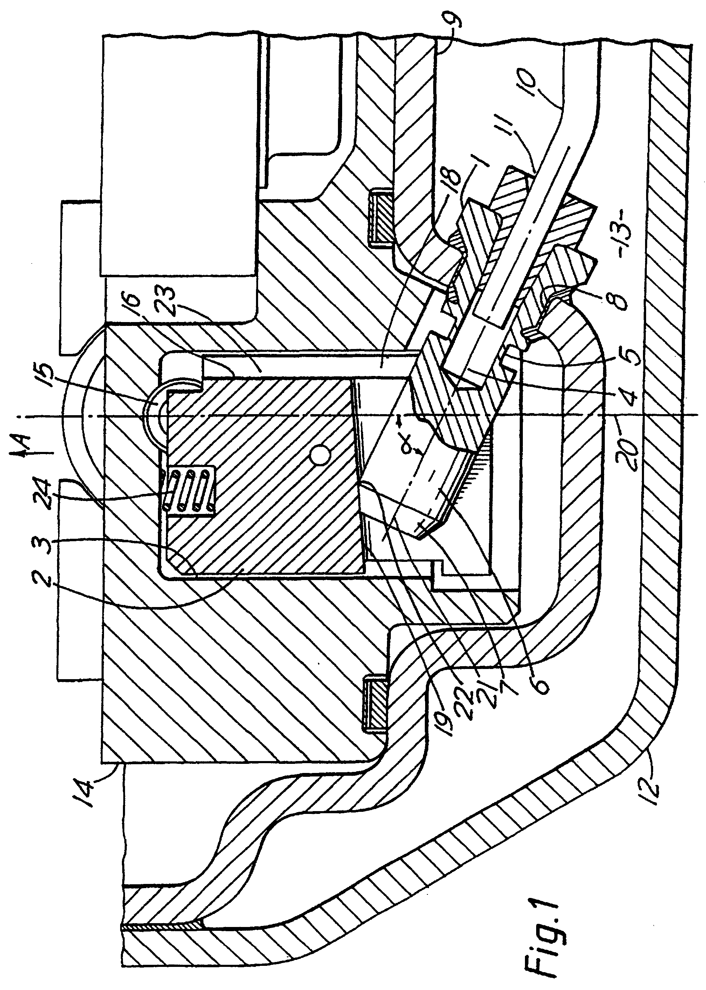

The invention will now be described by way of example with reference to the accompanying drawings of which:-
Figure 1 is a vertical section through part of a missile incorporating a valve according to the invention,
Figure 2 is an end view of a mass shown in figure 1 to a smaller scale,
Figure 3 is a vertical centre section through the mass of figure 2,
Figure 4 is a plan view of the mass. and
Figure 5 is a perspective view of an anti-rattle device.

Referring to the drawings, the valve is shown installed in the head of a mortar shell and liquid ammonia released thereby is used to cool part of a seeker system of the shell. The valve comprises a fixed lever arm in the form of a hollow tube 1 of medium strength stainless steel and a floating mass 2 axially slideable in a bore 3.

The hollow tube 1 is of circular cross-section having a sealed passageway in the form of a drilling 4 formed partway therealong. The drilling 4 extends beneath a weakening in the tube 1 in the form of a rectangular groove 5. The groove 5 is thus formed in a surrounding wall of the passageway or drilling 4. An upper portion 6 of the tube 1 is solid and a free end 7 of the tube 1 is chamfered.

The tube 1 is brazed in position in an opening 8 in a sealing wall 9 in the head of the shell. A feed tube 10 is inserted into an open end 11 of the tube 1. The valve is sealed within a container 12 containing ammonia 13.

Mounted to the sealing wall 9 is a support structure 14 for the valve which defines the bore 3 therein. The bore 3 opens into an outlet 15 affording a passage to the apparatus to be cooled for ammonia released from the hollow tube 10.

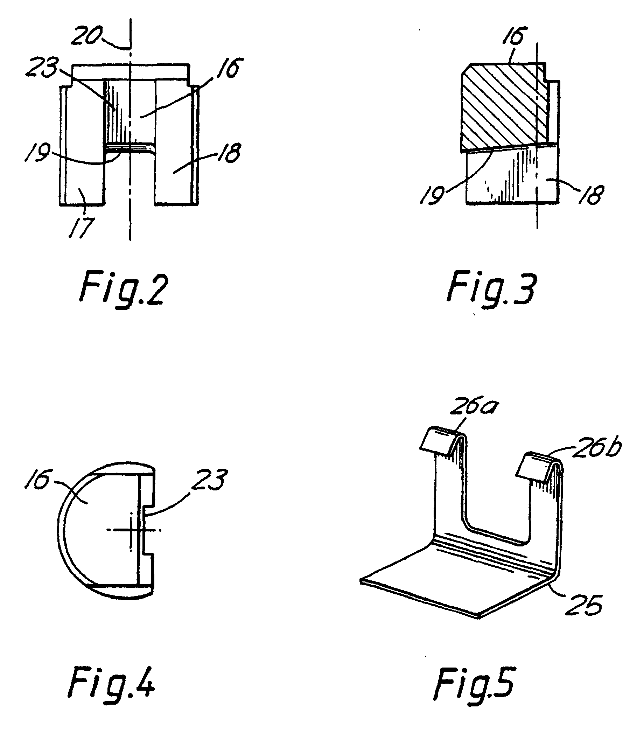

The floating mass 2 (see in particular figures 2,3 and 4) has a central bridge portion 16 from which depend 2 skirt portions 17,18 partially to surround the hollow tube 1. A lower surface 19 of the bridge portion 16 is adapted to contact the chamfered free end 7 of the tube 1.

The floating mass 2 is a loose sliding fit within the bore 3 on an axis of sliding movement 20 extends through the bore 3. An axis 21 of the tube makes an angle alpha between the axes 20, 21 which is less than 90°.

In operation, when an acceleration above a pre-determined threshold value is applied to the valve in the direction of the arrow 'A', everything shown, save the floating mass, will be driven in the direction of the arrow with the applied acceleration. The floating mass 2 however will exert an inertial reactive moment on the tube 1 as the tube 1 accelerates with respect to the mass in the bore 3. The moment arm will be between a point 22 in contact with the mass 2 (immediately after bending of the tube 1 commences) and a point within the axial length of the rectangular groove 5.

The greater the separation between contact point 22 and the groove 5, the greater the bending moment. Failure of the tube, by fracturing around the groove 5, is substantially due to this bending moment. The arm will also be subjected to shear forces, but these play a virtually insignificant part in its mode of failure.

It has been found that a wall thickness of the tube 1 at the groove 5 of the order of 0.1 mm allowed fracture to occur in bending from a threshold acceleration value of approximately 1800g. In this example the floating mass 2 weighed 2g and was composed of a proprietary heavy metal having a density in the region of 17 gcm⁻³. In the valve illustrated the angle alpha is 65°, the tube 1 being arranged so that the upper portion 6 thereof ends up at 90° to the axis 20, following fracture. The skirt portions 17, 18 act as guides to ensure that the tube 1 is bent in the plane of the paper by the mass 2.

Upon fracture of the tube 1 at the rectangular groove 5 the ammonia, which is pressurised, will be forced along the feed tube 10 past the fracture into the bore 3. A cut-out 23 in the floating mass 2 allows the ammonia to pass the mass and reach the outlet 15 from the bore whence the ammonia is passed to the apparatus to be cooled.

The embodiment described above may be modified to incorporate an anti-rattle device.

For example, such a device could comprise a compression spring 24 located within a recess in the mass 2.

Alternatively, the spring-loaded device 25 of Figure 5 is located within the bore 3 and positioned so that the lower face of the mass 2 rests on two arms 26a, 26b, of the device 25. The arms 26a, 26b are strong enough to hold the mass off the tube 1 until the threshold acceleration is reached, whereupon, the arms 26a, 26b deflect, allowing the mass to move towards the tube 1. This alternative device 25 is particularly advantageous for use in cases where the tube 1 is made from a relatively fragile material such as glass or plastics.

In the further embodiment of the invention, the floating mass 2 is dispensed with and the tube upper portion is enlarged to create its own inertial mass.

The valve of the present invention provides good predictability as to fracture of the lever arm for use in applications where reliability is paramount.

## Claims

1. A shock valve for releasing a fluid in response to an acceleration applied thereto above a threshold value, the valve including a fixed lever arm (1) defining a sealed fluid passageway (4) therein and a mass (2), the lever arm (1) and mass (2) being relatively positioned so that during the said acceleration the mass (2) exerts a bending moment on the arm (1) to fracture same and break the fluid seal, the mass (2) being shaped at least partially to surround the lever arm (1) whereby to guide the arm during bending thereof.

2. A shock valve as in claim 1 in which the mass (2) forms an integral part with the lever arm (1).

3. A shock valve as in claim 1 in which the mass (2) floats substantially along an axis of a bore (3) within which the mass (2) is slideable and into which the lever arm (1) projects.

4. A shock valve as in claim 3 in which the lever arm (1) and the mass (2) are positioned and formed whereby the centre of mass of the mass (2) is aligned with a point of contact between said mass (2) and arm (1).

5. A shock valve as in claim 1 in which the lever arm (1) has a weakening (5) formed therein to encourage fracture thereat.

6. A shock valve as in claim 5 in which the weakening comprises a peripheral groove (5) formed around the arm (1).

7. A shock valve as in claim 6 in which the peripheral groove (5) is of substantially rectangular cross-section.

8. A shock valve as in claim 5,6, or 7, in which the weakening (5) is formed in a surrounding wall of the sealed passageway (4).

9. A shock valve as in any of claims 1-8 including an anti-rattle device (24, 25) for preventing the mass (2) vibrating within the bore (3).

10. A shock valve as in claim 9 in which the anti-rattle device is a compression spring (24) located within a recess in the mass (2).

11. A shock valve as in claim 9 in which the anti-rattle device is a spring-loaded element (25) located within said bore (3) and incorporating support means (26a,26b) for lifting the mass (2) clear of the lever arm (1).

## Patentansprüche

1. Stoßventil zur Freigabe eines Fluids als Reaktion auf eine darauf ausgeübte Beschleunigung oberhalb eines Schwellenwerts, wobei das Ventil einen festen Hebelarm (1) umfasst, der einen abgedichteten Fluiddurchlass (4) darin sowie eine Masse (2) abgrenzt, wobei der Hebelarm (1) und die Masse (2) im Verhältnis zueinander so positioniert sind, dass die Masse (2) während der Beschleunigung ein Biegemoment auf den Arm (1) ausübt, um denselben zu brechen und den Fluidverschluß zu brechen, wobei die Masse (2) zumindest teilweise derart geformt ist, dass sie den Hebelarm (1) umgibt, um dadurch den Arm während des Biegens desselben zu führen.

2. Stoßventil nach Anspruch 1, bei dem die Masse (2) einstückig mit dem Hebelarm (1) gebildet ist.

3. Stoßventil nach Anspruch 1, bei dem die Masse (2) im Wesentlichen entlang der Achse einer Bohrung (3) schwebt, in der die Masse (2) gleitfähig ist und in die der Hebelarm (1) vorsteht.

4. Stoßventil nach Anspruch 3, bei dem der Hebelarm (1) und die Masse (2) derart angeordnet und gebildet sind, dass der Massenmittelpunkt der Masse (2) mit einem Kontaktpunkt zwischen der Masse (2) und dem Arm (1) ausgerichtet ist.

5. Stoßventil nach Anspruch 1, bei dem eine Sollbruchstelle (5) in dem Hebelarm (1) gebildet ist, um einen Bruch an derselben zu fördern.

6. Stoßventil nach Anspruch 5, bei dem die Sollbruchstelle eine Umfangsrille (5) aufweist, die um den Arm (1) gebildet ist.

7. Stoßventil nach Anspruch 6, bei dem die Umfangsrille (5) einen im Wesentlichen rechtwinkligen Querschnitt aufweist.

8. Stoßventil nach Anspruch 5, 6 oder 7, bei dem die Sollbruchstelle (5) in einer umgebenden Wand des abgedichteten Durchlasses (4) gebildet ist.

9. Stoßventil nach einem der Ansprüche 1 - 8, das einen Klapperschutz (24, 25) umfasst, um ein Vibrieren der Masse (2) in der Bohrung (3) zu verhindern.

10. Stoßventil nach Anspruch 9, bei dem der Klapperschutz eine Druckfeder (24) ist, die in einer Vertiefung in der Masse (2) angeordnet ist.

11. Stoßventil nach Anspruch 9, bei dem der Klapperschutz ein federbelastetes Element (25) ist, das in der Bohrung (3) angeordnet ist und Stützmittel (26a, 26b) umfasst, um die Masse (2) von dem Hebelarm (1) abzuheben.

## Revendications

1. Soupape à percussion pour libérer un fluide en réponse à une accélération qui lui est appliquée au-dessus d'une valeur seuil, la soupape comprenant un bras de levier fixe (1) définissant à l'intérieur une voie de passage du fluide hermétiquement fermée (4) et une masse (2), le bras de levier (1) et la masse (2) étant positionnés respectivement afin que pendant ladite accélération, la masse (2) exerce un moment de flexion sur le bras (1) pour rompre celui-ci et casser le joint d'étanchéité du fluide, la masse (2) étant formée au moins en partie pour entourer le bras de levier (1) par lequel le bras est guidé pendant sa flexion.

2. Soupape à percussion selon la revendication 1 dans laquelle la masse (2) fait partie intégrante du bras de levier (1).

3. La revendication 1 dans laquelle la masse (2) flotte sensiblement le long de l'axe d'une perforation (3) à l'intérieur de laquelle cette masse (2) coulisse et dans laquelle le bras de levier (1) fait saillie.

4. La revendication 3 dans laquelle le bras de levier (1) et la masse (2) sont positionnés et formés afin que le centre de gravité de la masse (2) soit aligné avec un point de contact entre ladite masse (2) et le bras (1).

5. La revendication 1 dans laquelle le bras de levier (1) présente une faiblesse de formage (5) en son intérieur pour en favoriser la fracture.

6. La revendication 5 dans laquelle la faiblesse comporte une rainure périphérique (5) formée autour du bras (1).

7. La revendication 6 dans laquelle la rainure périphérique (5) présente une coupe transversale sensiblement rectangulaire.

8. Les revendications 5, 6, ou 7, dans laquelle la faiblesse (5) est formée dans la paroi entourant la voie de passage étanche (4).

9. Les revendications 1 à 8 comprenant un dispositif de maintien (24, 25) empêchant la masse (2) de vibrer à l'intérieur de l'âme (3).

10. La revendication 9 dans laquelle le dispositif de maintien est un ressort de compression (24) situé à l'intérieur d'un évidement dans la masse (2).

11. La revendication 9 dans laquelle le dispositif de maintien est un élément à ressort (25) situé à l'intérieur de la perforation (3) et comprenant des supports (26a, 26b) pour lever la masse (2) et la libérer du bras de levier (1).
